Europäisches Patentamt

European Patent Office

Office européen des brevets

(11) Veröffentlichungsnummer: **0 259 674**

A2

## (12) EUROPÄISCHE PATENTANMELDUNG

(21) Anmeldenummer: 87112117.4

(22) Anmeldetag: 20.08.87

(51) Int. Cl.4: **B01D 53/02** , B01D 53/04 , B03C 3/14

(30) Priorität: 25.08.86 DE 3628858

(43) Veröffentlichungstag der Anmeldung:
16.03.88 Patentblatt 88/11

(84) Benannte Vertragsstaaten:
AT BE CH DE ES FR GB GR IT LI LU NL SE

(71) Anmelder: **Burger, Manfred R.**
**Wolfratshauser Strasse 45j**
**D-8023 Pullach(DE)**

Anmelder: **Schmidt, Peter**
**Starenweg 15**
**D-8038 Gröbenzell(DE)**

Anmelder: **Kettrup, Antonius, Prof. Dr.**
**Rumbecker Höhe 10**
**D-5760 Arnsberg(DE)**

(72) Erfinder: **Burger, Manfred R.**
**Wolfratshauser Strasse 45j**
**D-8023 Pullach(DE)**
Erfinder: **Schmidt, Peter**
**Starenweg 15**
**D-8038 Gröbenzell(DE)**
Erfinder: **Kettrup, Antonius, Prof. Dr.**
**Rumbecker Höhe 10**
**D-5760 Arnsberg(DE)**

(74) Vertreter: **Patentanwälte TER MEER - MÜLLER**
**- STEINMEISTER**
**Mauerkircherstrasse 45**
**D-8000 München 80(DE)**

(54) **Verfahren und Vorrichtung zur Reinigung von mit toxischen Gasen belasteter Luft.**

(57) Das Verfahren und die Filtervorrichtung zur Reinigung von insbesondere mit CO belasteter Luft verwendet ein Filtermedium auf Aktivkohle-und Metalloxidbasis, das erfindungsgemäß geringfügig erwärmt wird auf eine Temperatur, die um beispielsweise 5 bis maximal ca. 80°C über der Umgebungstemperatur liegt. Durch diese geringfügige Erwärmung des Filtermediums lassen sich die schädlichen Einflüsse kondensierenden Wasserdampfs auf die Wirksamkeit des Filtermediums vermeiden.

## Verfahren und Vorrichtung zur Reinigung von mit toxischen Gasen belasteter Luft

Die Erfindung betrifft ein Verfahren und eine Vorrichtung zur Reinigung von mit toxischen Gasen, insbesondere mit CO (Kohlenmonoxid), $NO_x$ (Stickoxiden), $SO_2$ (Schwefeldioxid) und Kohlenwasserstoffen unterschiedlicher Zusammensetzung belasteter Luft mittels eines Filtermediums auf Aktivkohlebasis.

Aus arbeitsmedizinischer Sicht stellt die Belastung der Atemluft mit CO, $NO_x$ und Kohlenwasserstoffen ein gravierendes Problem für eine ganze Reihe von Berufsgruppen dar, insbesondere, jedoch nur beispielsweise, für Berufskraftfahrer. Die Beseitigung der genannten toxischen Gase speziell aus Autoinnenräumen ist mit den heutigen Filtermethoden jedenfalls dann unmöglich, wenn eine wirtschaftlich vertretbare Lösung angestrebt wird.

Die Problematik der Luftbelastung mit CO, $NO_x$, Kohlenwasserstoffen und $SO_2$ geht jedoch viel weiter und beeinflußt einmal die Energiepolitik und zum anderen die Überlegungen zur Gesundheitspolitik im allgemeinen. Hierbei ist insbesondere an die Freihaltung von Innenräumen von toxischen Gasen gedacht, in denen beispielsweise durch TabakrauchenCO entsteht, und dies speziell nachdem Tabak in die Lister der gefährlichen Arbeitsstoffe aufgenommen wurde. Ferner spielt das Problem der zuverlässigen Filtration vor allem von CO und $NO_x$ in weiten Bereichen der Industrie eine große Rolle.

Mit wirtschaftlich vertretbarem Aufwand ist die Filtration insbesondere von CO bei Temperaturen, die für den menschlichen Organismus erträglich sind, bisher nicht möglich, sondern lediglich bei Temperaturen, die weit über 100°C liegen.

Zur Entfernung von CO kommen in erster Linie HOPKALIT sowie Mischkatalysatoren wie z.B.$Cr_2O_3/MNO_2/CuO$ oder $CO_2O_3/CoO$ oder reine Metalloxide wie z.B. CuO zum Einsatz. Als einziges der bekannten Filter-/Katalysatormaterialien wirkt HOPKALIT auch bei niedrigen Temperaturen. Leider ist die Wirksamkeit bei bestimmten Umweltbedingungen stark limitiert. Alle anderen Metalloxidgemische sind erst bei Temperaturen T >150°C wirksam.

Bekanntermaßen hat die in dem Filtermaterial enthaltene Aktivkohle zwei Funktionen, d.h. sie dient als Träger sowie als Filter für die eintretenden toxisch belasteten bzw. konvertierten Gase. Anstelle von Aktivkohle wären also auch Medien einsetzbar, die eine ähnliche Funktion erfüllen, beispielsweise Molekularsiebe oder Ionentauscher.

In der einschlägigen Industrie, in Forschungsinstituten und dergleichen, insbesondere in allen großen Firmen der Kraftfahrzeugindustrie, wird selbstverständlich seit vielen Jahren versucht, die Fahrgastinnenräume von Kraftfahrzeugen durch Filtration der von außen durch den Fahrtwind eingedrückten oder angesaugten Luft von den genannten toxischen Gasen soweit als möglich zu befreien. Dabei ist die Verwendung von mikroporösen Filtermedien,insbesondere von Filtermedien auf Aktivkohlebasis, immer im Vordergrund des Interesses gestanden. Entsprechendes gilt für die Beseitigung gasförmiger Luftverunreinigungen in Innenräumen, wobei hier insbesondere an Kohlenmonoxid gedacht wird, das unter den zahlreichen Inhaltsstoffen des Tabakrauchs sowohl im Hauptstrom-als auch im Nebenstromrauch vorkommt. Bekannt ist, daß für bestimmte Risikogruppen von Menschen, d. h. von Personen mit pektangiösen Beschwerden, Personen mit peripherer arterieller Verschlußkrankheit sowie für schwangere Frauen bereits bei Überschreiten eines Kohlenmonoxid-Hämoglobinwerts im Blut von 2 bis 3 % Auswirkungen auf die Gesundheit auftreten können. Somit kommt dem sogenannten Passivrauchen als Belastung der Nichtraucher am Arbeitsplatz ebenfalls eine besondere Bedeutung zu.

Der Erfindung liegt die Aufgabe zugrunde, ein Verfahren zu entwickeln und eine nach diesem Verfahren arbeitende Vorrichtung zu schaffen, mit denen die Filtration insbesondere von CO auch bei niederen Temperaturen, die auf dem Niveau der Umgebungstemperatur oder geringfügig darüber liegen, zu ermöglichen.

Die erfindungsgemäße Lösung besteht entsprechend der Lehre der Patentansprüche 1 und 3 darin, daß das Filterbett selbst und/oder die mit toxischen Gasen belastete Luft unmittelbar vor Eintritt in das Filterbett geringfügig erwärmt wird, und zwar vorzugsweise auf eine Temperatur, die um etwa 5 bis 50°C, gegebenenfalls auch bis 80°C, über der Umgebungstemperatur liegt, derart, daß sich kein Wasserdampfniederschlag im oder auf dem Filterbett bildet.

Als Ausgangspunkt des Erfindungsgedankens konnte zunächst durch Versuche festgestellt werden, daß der in der Luft immer vorhandene Wasserdampf ein besonderes Problem für eine längerzeitige Wirksamkeit aller bisher verwendeten Filtermedien darstellt, insbesondere auch bei Verwendung des an sich gut wirksamen und unter der Handelsbezeichnung HOPKALIT bekannten Filtermediums. Bisher gab es keine befriedigende Erklärung für das Phänomen, daß HOPKALIT - schon nach kurzer Zeit, insbesondere bei der Beseitigung von CO, fast vollständig wirkungslos wurde.

Überraschenderweise wurde nun mit der Erfindung gefunden, daß eine nur geringfügige Erwärmung des Filtermediums bereits eine durchschlagende Wirkung zeigt. Das mikroporöse Filtermedium blieb auch über sehr lange Testperioden und bei vergleichsweise sehr hohen Wasserdampfkonzentrationen und bei künstlich erzeugten hohen CO-Konzentrationen der Luft voll wirksam.

Als Grund für die wesentlich gesteigerte Langzeitwirksamkeit des Filtermediums bei geringfügiger Erwärmung kann angenommen werden, daß eine Kondensation von Wasserdampf in den kapillaren Innenräumen des Filtermediums und/oder auf dem Filterbett nun nicht mehr auftreten kann, so daß die katalytische und kapillare Wirksamkeit des Filterme diums auch über lange Zeiträume aufrechterhalten werden kann.

Ein Ausführungsbeispiel der Erfindung wird nachfolgend unter Bezug auf die Zeichnung erläutert. Es zeigen:

Fig. 1 ein prinzipielles Ausführungsbeispiel für das Kernstück einer Filtervorrichtung mit erfinduncscemäßen Merkmalen,

Fig. 2 in schematischer Darstellung den Aufbau einer Versuchsfilteranlage unter Verwendung einer Filtervorrichtung erfindungsgemäßer Bauart, und

Fig. 3 die Prinzipdarstellung eines Heiz-und Belüftungssystems fir ein Kraftfahrzeug bei Verwendung einer erfindungsgemäßen Filteranlage.

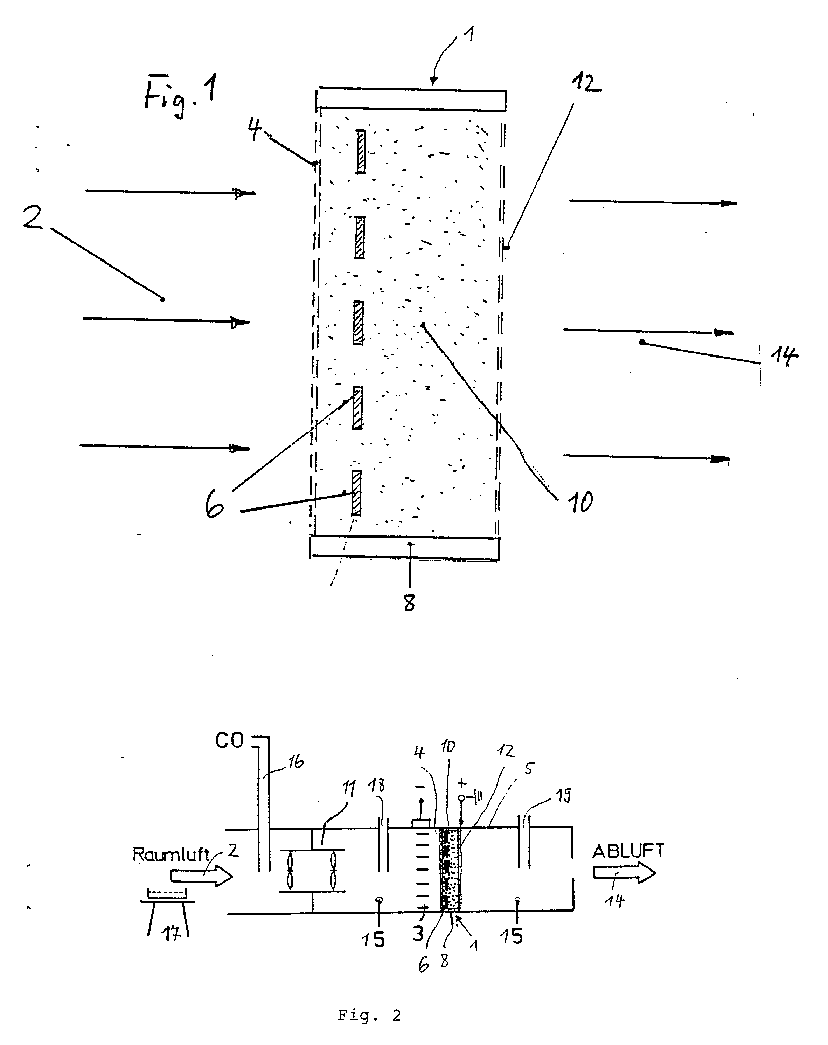

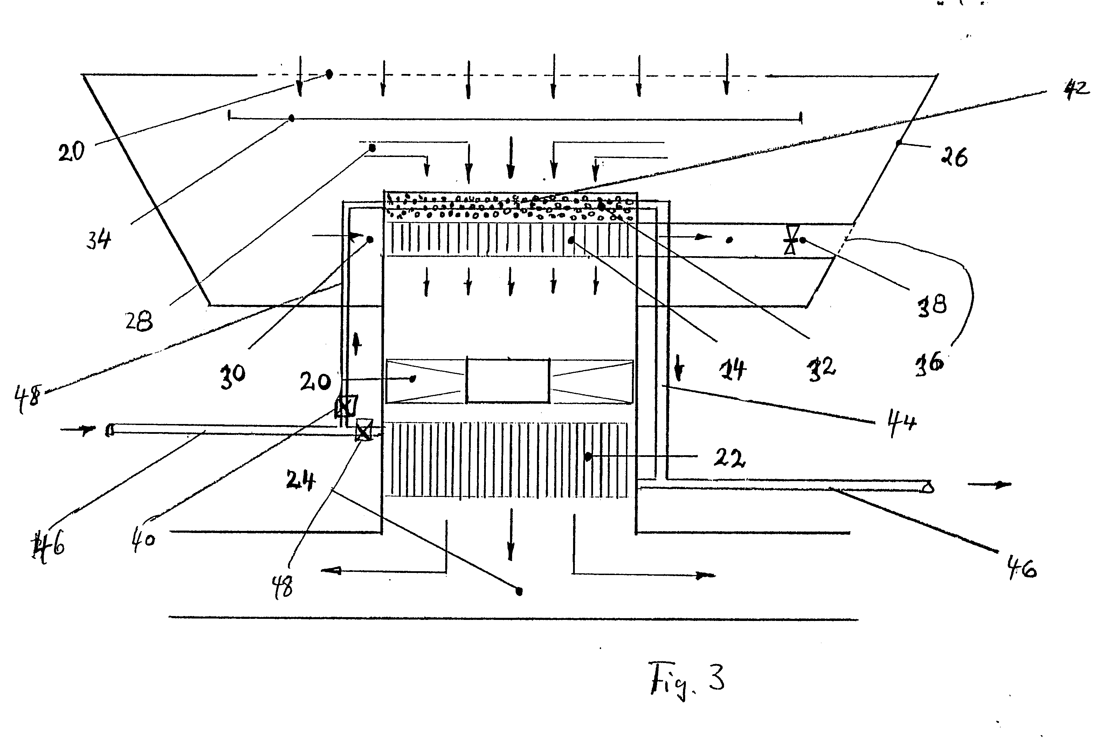

Das in Fig. 1 in schematischer Seitenschnittdarstellung gezeigte Filterelement ist Teil einer Filtervorrichtung mit erfindungsgemäßen Merkmalen und umfaßt einen in ein Filtergehäuse 5 (siehe Fig. 2) auswechselbar einsetzbaren Rahmen 8 mit einem den Lufteintritt nicht behindernden Gitter 4 auf der Zuluftseite (Zustromseite) 2 sowie ein weiteres Gitter 12 auf der Abluftstromseite 14. Es versteht sich, daß der Durchströmquerschnitt des Filterelements 1 an den Kanal-oder Gehäusequerschnitt der Filtervorrichtung entsprechend dem jeweiligen Anwendungszweck angepaßt ist. So kann das Filterelement 1 beispielsweise an den Querschnitt eines Zuluftkanals zum Fahrgastinnenraum eines Kraftfahrzeugs angepaßt sein und von der Motorraumseite her über eine oberseitig zu öffnende Klappe ausgewechselt werden (vgl. Fig. 3). Der Innenraum des Filterelemerts 1 zwischen den Gittern 4 und 12 ist bei vergleichsweise lockerer Schüttdichte mit einem Filtermedium 10 auf Aktivkohlebasis,versetzt mit Metalloxiden, insbesondere mit dem unter der Handelsbezeichnung HOPKALT bekannten Filtermedium, gefüllt. Das Filtermedium 10 kann auch scheiben-oder tabeletenförmig bei vergleichsweise geringer Preßdichte in den Innenraum zwischen den Gittern 4 und 12 eingebracht sein; an Bestandteilen weist es im wesentlichen Aktivkohle definierter Struktur und Vorbehandlung, Schwermetalloxidgemische definierter Zusammensetzung, Alkali-/Erzalkalioxidmischungen sowie in der Regel eine Edelmetalloxiddotierung auf.

Das so weit beschriebene Filterelement 1 ist herkömmlicher Bauart. Als wesentliches erfindungsgemäßes Element kommt eine Heizeinrichtung 6 hinzu, durch welche das Filtermedium 10 auf eine Temperatur gebracht werden kann, die relativ geringfügig über der Umgebungstemperatur liegt. Unter "relativ geringfügig" wird dabei eine (positive) Temperaturdifferenz zur Umgebungstemperatur von beispielsweise 5 bis 60°C, in Ausnahmefällen auch bis 80°C, verstanden. Entscheidende für die Verwirklichung des Erfindungsgedankens ist, daß die Bildung von Wasserkondensation innerhalb des Filtermediums 10 und/oder auf der Oberfläche des Filtermediums bei praktisch vorkommenden Luftfeuchtigkeitsgraden vermieden wird. So kann beispielsweise auch daran gedacht werden, die Heizeinrichtung 6 regelbar auszulegen, so daß bei minimalem Heizleistungsverbrauch in ungefährer Abhängigkeit vom Wert der relativen Luftfeuchtigkeit in jedem Fall sicher die Bildung von Wasserkondensation im Filtermedium 10 verhindert wird.

In der Darstellung der Fig. 1 ist die Heizeinrichtung 6 als eine Mehrzahl von elektrischen Widerstandsheizstäben bzw. als Heizgitter dargestellt. Versuche mit einem Filterelement 1, wie es gut im Zuluftkanal zu einer Fahrgastkabine eines Kraftfahrzeugs verwendet werden könnte, haben ergeben, daß eine Heizleistung von etwa 100 W bis maximal 600 W für den vorgesehenen Zweck einer geringfügigen Erwärmung des Filtermediums 10 über die Umgebungstemperatur völlig ausreicht.

Für die Freihaltung der Fahrgastkabine eines Kraftfahrzeugs von den genannten toxischen Gasen wird es meist zweckmäßig sein, eine andere Art der Erwärmung des Filtermediums 10 vorzusehen. Kraftfahrzeuge sind in aller Regel ohnehin mit einer Heizeinrichtung für den Fahrgastraum ausgestattet. Es ist ohne weiteres möglich, ein getrennt einstellbares Wärmetauscherelement in den Frischluftkanal im Bereich des vorgesehenen Filterelements zu verlegen, um dadurch die angestrebte geringfügige Erwärmung des Filtermediums 10 zu erreichen. Obwohl die dadurch eintretende geringfügige Erwärmung auch der (gereinigten) Luft auf der Abluftstromseite 14 im Fahrgastraum kaum merklich ins Gewicht fällt, kann, um einen guten Belüftungskomfort auch bei hohen Außentemperaturen zu gewährleisten, ergänzend eine Rückkühlung bzw. Nachkühlung der gereinigten Luft nach dem Austritt aus dem abluftseitigen Gitter 12 vorgesehen werden, beispielsweise über eine Umluftkühlung durch den Fahrtwind oder auch über eine in vielen Fahrzeugen ohnehin vorhandene Klimaanlage. Die dabei abzuführende Wärmemenge liegt deutlich unter der Wärmemengeabgabe einer einzelnen Person an die Umwelt.

Aus praktisch-technischen Erwägungen kann es zweckmäßig sein, die Heizelemente 6 bzw. das von einem erwärmten Fluid (beispielsweise Kühlwasser) durchströmte, für die Erwärmung des Filtermediums 10 bestimmte Wärmetauscherelement unmittelbar am oder vor dem Gitter 4 auf der Zuluftseite 2 anzuordnen. In diesem Fall wird das Filtermedium 10 ebenfalls ausreichend erwärmt, aber zusätzlich tritt eine Erwärmung der mit toxischen Gasen noch belasteten Zuluft unmittelbar vor dem Eintritt in das Filtermedium 10 ein. Auch diese Art der Erwärmung des Filtermediums 10 bzw. der in das Filtermedium 10 eintretenden Luft führt zu befriedigenden Ergebnissen. Entscheidend ist, daß auch in diesem Fall keine Kondensation des Wassergehalts der Luft im oder auf dem Filtermedium 10 eintritt.

Die Anwendung einer erfindungsgemäßen CO-Reinigungsanlage im Beheizungs- und Lüftungssystem für den Fahrgastinnenraum eines Kraftfahrzeugs zeigt die Figur 3.

Der Lufteintritt erfolgt beispielsweise an der Oberseite der Motorhaube eines Kraftfahrzeugs iber ein Gitter 20 unter dem sich, um das Eindringen von Wasser zu verhindern, ein Regenwasserabweiser 34 befindet. Der ansaugseitige Luftkanal ist mit Bezugshinweis 26 angegeben und der Bezugshinweis 28 läßt die unter der Wirkung eines Hauptgebläses 20 in den Kraftfahrzeuginnenraum (nicht dargestellt) angesaugte Zuluft erkennen. Die Zuluft 28 durchströmt zunächst ein erfindungsgemäß aufgebautes CO-Filter 32, das von einem Hilfswärmetauscher 42 durchsetzt ist, der über eine durch ein Ventil 40 zu öffnende bzw. zu sperrende Hilfsleitung 48 an die Heißwasserzulaufleitung 46 (ausgehend vom Motorkühler) zum Hauptwärmetauscher 22 (Heizung des Kraftfahrzeugs) angeschlossen ist. Das über die Hilfsleitung 48 zuströmende Wärmefluid (Kühlmittel, z.B. Wasser) wird nach Durchströmen des Hilfswärmetauschers 42 im Filter 32 über eine Hilfsrückleitung 44 in die Ableitung 46 vom Hauptwärmetauscher 22 zum Motorkühler zurückgeleitet. Über den Hilfswärmetauscher 42 kann also gemäß der Lehre der Erfindung das Filtermedium im CO-Filter 32, gegebenenfalls reguliert über das Ventil 40, auf eine Temperatur gebracht werden, die geringfügig über der Umgebungstemperatur liegt, so daß der oben erwähnte Dampf- bzw. Wasserniederschlag am oder im Filtermedium nicht zu befirchten ist. In Durchströmungsrichtung unmittelbar an das CO-Filter 32 anschließend kann ein Hilfswärmetauscher 24 vorgesehen sein um gegebenenfalls bei höheren Außentemperaturen die geringfügig erwärmte Luft wieder abzukühlen. Der Hilfswärmetauscher 24 wird von in Querrichtung strömender Luft gekühlt, die bei 30 in einen Querkanal unter der Wirkung eines Hilfsgebläses 38 angesaugt wird und bei 36 wieder abgeführt wird. Sofern das Kraftfahrzeug mit einer Klimaanlage ausgerüstet ist, kann der Hilfswärmetauscher 24 selbstverständlich entfallen. Ein Stellglied 48 zur stufenlosen Heizungsregulierung im Heißwasserzulauf 46 beeinflußt das über den Hilfswärmetauscher 32 im CO-Filter 42 fließende erwärmte Kühlmittel nicht, wie sich unmittelbar aus der Zeichnung durch die Anordnung des Ventils 40 bzw. des Stellglieds 48 ersehen läßt. Einzum Fahrgastinnenraum führender Luftverteiler ist mit Bezugshinweis 24 angegeben.

Mit dem Versuchsaufbau einer Filteranlage mit einem erfindungsgemäß beheizten Filtermedium 10 nach Fig. 2 ließ sich die hohe Wirksamkeit des erfindungsgemäßen Luftreinigungsverfahrens gut nachweisen.

In ein Filtergehäuse 5 mit Lüfter 11 wurde ein Filterelement 1 entsprechend dem anhand der Fig. 1 erläuterten Auf bau eingesetzt. Das Filtermedium 10 wurde mittels der Heizelemente 6 (Heizstäbe oder Heizgitter) auf eine Temperatur erwärmt, die geringfügig über der umgebenden Raumtemperatur lag. Um auf der Zustromseite 2 definierte Mengen an Raumluft ansaugen zu können, waren zwei getrennt regelbare Lüfter 11 vorgesehen, deren prinzipielle Anordnung die Fig. 2 erkennen läßt. Auf der Zuluftseite konnte über eine Zuleitung 16 eine definiert einstellbare Menge von CO in das Filtergehäuse 5 eingespeist werden. Im Zuluftbereich war außerdem ein Wasserdampfgenerator 17 vorgesehen, der im einfachsten Fall aus einer Heizplatte bestand, auf die ein Topf mit Wasser gestellt wurde, das zum Kochen gebracht wurde. Die angesaugte Raumluft konnte also auf einen weit über dem Normalen liegenden Wasserdampfgehalt gebracht werden.

Vor und hinter dem Filterbett 10 ließ sich an Entnahmestellen 18 und 19 kontinuierlich Probeluft entnehmen, die zunächst durch einen Infrarot-Gasanalysator und anschließend durch eine Gaswaschflasche (nicht gezeigt) geleitet wurde, die eine Lösung von Palladiumchlorid als Reagens auf Kohlenmonoxid (CO) enthielt. Sowohl vor als auch hinter dem Filterelement 1 befanden sich Meßpunkte 15 zur Messung der Luftfeuchtigkeit des Gasstroms. Die Messungen der Luftfeuchtigkeit erfolgten mit einem Gerät mit der Bezeichnung "MATZNER Hygrotest" des Typs 6200/6250.

Ein Beispiel der Versuchsbedingungen sei erläutert:

-Strömungsgeschwindigkeit des Luftstroms: 1,4 m/sec;
-Filterfläche: 0,01 m² (100 × 100 mm);

-Menge an Filtermedium auf Aktivkohlebasis: 1000 g;

-Konzentration von CO vor dem Filter: 40 ppm v/v bzw. 120 ppm v/v;

-relative Luftfeuchtigkeit vor dem Filtersystem variierend: 40, 60, 80 bzw. 90 %.

Die CO-Konzentration im Zuluftstrom 2 ließ sich durch eine Druckfeinregulierung an einer Druckgasflasche genau einstellen. Für jede der vorgewählten CO-Konzentrationen wurde der Einfluß der angegebenen unterschiedlichen Luftfeuchtigkeitswerte untersucht.

Als Ergebnis ließ sich folgendes feststellen:

Bei keinem der Versuche zeigte der Infrarotgasanalysator, der mit einem Kalibriergas geeicht war, auch bei einer Versuchsdauer von mehreren Stunden die Anwesenheit von Kohlenmonoxid im Abluftstrom 14 an. Die (braune) Lösung von Palladiumchlorid in der Gaswaschflasche zeigte keinerlei Trübung, d. h. das Kohlenmonoxid war vollständig durch das Filterelement 1 zurückgehalten worden.

Eine weitere Verbesserung der Luftreinigung ließ sich erzielen, wenn das Filterelement 1 in an sich bekannter Weise (vgl. DE-Patentschriften 27 21 528 und 28 02 965) als sogenanntes Elektroaktivfilter betrieben wurde. In diesem Fall war die Filteranordnung auf der Zuluftseite 2 um eine Hochspannungsionisierungsvorrichtung 3 bekannter Bauart ergänzt, die an den negativen Quellenpol (Minus-Pol) einer hochohmigen Hochspannungsquelle von beispielsweise 15 bis 20 kV angeschlossen wurde. Der andere Quellenpol der Hochspannungsquelle (Plus-Pol) wurde über das abluftseitige metallische Gitter 12 unmittelbar an die stromabliegende Seite des Filtermediums 10 angeschlossen. Das Filterelement 1 war über den Rahmen isoliert im Filtergehäuse 5 gehalten. Bei diesem ergänzten Versuchsaufbau wurde eine noch bessere Reinigungswirkung insbesondere hinsichtlich der an mikrofeine Staubpartikel angelagerten toxischen Gasverbindungen erreicht. Diese Ergänzung des Erfindungsgedankens eines geringfügig erwärmten Filtermediums in Kombination mit einem Elektroaktivfilter gemäß der beschriebenen Bauart läßt also sehr hohe Reinigungswirkung auch für solche Luftbelastungen erwarten (etwa für Dieselmotorabgase), bei denen eine mehr oder weniger starke Anlagerung von CO- bzw. $NO_x$-Verbindungen an mikrofeine Partikel im Bereich einer Größenordnung von $\leq 0,5$ $\mu$m gegeben ist.

Als Anwendungsbereich für die Erfindung ist in erster Linie an die Fernhaltung von schädlichen Abgasanteilen aus Flugzeug-bzw. Fahrgastinnenräumen von Flugzeugen bzw. von Kraftfahrzeugen, an die Lufteinhaltung in Garagen aber auch in Gaststätten oder allgemein von Räumen gedacht, in denen Tabakrauch anfällt. Besonderes Interesse an hochwirksamen Filtern erfindungsgemäßer Bauart besteht auch im industriellen (Pharma-und Elektroindustrie) und im medizinischen Bereich, wo unter anderem besonderer Wert auf die Qualitätskontrolle gelegt werden muß. Gegenüber herkömmlichen Möglichkeiten zur Beseitigung von CO, $NO_x$ und $SO_2$ aus der Atemluft bietet die Erfindung den entscheidenden Vorteil, daß mit vergleichsweise niedrigem technischem Zusatzaufwand nahezu bei Umgebungstemperatur des Filtermediums 10 gearbeitet werden kann.

## Ansprüche

1. Verfahren zur Reinigung von mit toxischen Gasen, insbesondere mit Kohlenmonoxid (CO) belasteter Luft mittels eines Filtermediums aus Aktivkohle und Metalloxiden, **dadurch gekennzeichnet,** daß das Filtermedium und/oder die belastete Luft unmittelbar vor Eintritt in das Filtermedium auf eine geringfügig über der Umgebungstemperatur liegende Temperatur so aufgeheizt wird, daß sich kein Wasserniederschlag im oder auf dem Filtermedium bildet.

2. Verfahren nach Anspruch 1, **dadurch gekennzeichnet,** daß die Luft nach Austritt aus dem Filtermedium rückgekühlt wird.

3. Filtervorrichtung zur Reinigung von mit toxischen Gasen, insbesondere mit Kohlenmonoxid (CO) belasteter Luft mit einem in ein Filtergehäuse (8) eingebauten Filterbett (10) auf Aktivkohle/Metalloxidbasis, durch welches die zu reinigende Luft hindurchgeleitet wird, **dadurch gekennzeichnet,** daß zur Verhinderung von Wasserniederschlag im oder auf dem Filtermedium unmittelbar vor oder im Filterbett (10) eine Heizeinrichtung (6) angeordnet ist zur Erwärmung des Filterbetts auf eine geringfügig über der Umgebungstemperatur liegende Temperatur.

4. Filtervorrichtung nach Anspruch 3, **dadurch gekennzeichnet,** daß die Heizeinrichtung so dimensioniert ist, daß das Filterbett (10) auf eine Temperatur im Bereich von 5°C bis 60°C über Umgebungstemperatur erwärmt wird.

5. Filtervorrichtung nach Anspruch 3 oder 4, **gekennzeichnet durch** eine auf der Abstromseite des Filterbetts (10) angeordnete Kühleinrichtung zur Rückkühlung des aus dem Filterbett austretenden gereinigten Luftstroms.

6. Filtervorrichtung nach einem der vorstehenden Ansprüche 3 bis 5, **dadurch gekennzeichnet,** daß als Filtermaterial des Filterbetts (10) eine Mischung aus Aktivkohle und Metalloxiden verwendet wird, die als wesentliche Bestandteile vorbehandelte Aktivkohle, ein Schwermetalloxidgemisch, Alkali-/Erdalkalioxide und eine Edelmetalloxiddotierung umfaßt.

7. Filtervorrichtung nach wenigstens einem der vorstehenden Ansprüche 3 bis 6, **dadurch gekennzeichnet,** daß das Filterbett (10) in an sich bekannter Weise als Elektroaktivfilter betrieben wird, bei dem die toxisch belastete Luft vor Eintritt in das Filterbett (10) ionisiert wird, während der Gegenpol der ionisierenden Hochspannungsquelle auf der Stromabseite unmittelbar an das Filterbett angeschlossen ist.

8. Filtervorrichtung nach einem der vorstehenden Ansprüche 3 bis 7, **dadurch gekennzeichnet,**daß die Heizeinrichtung (6) durch elektrische Widerstandsheizelemente in Form von Stäben oder in Form eines Gitters gebildet ist, die auf der Stromzuseite unmittelbar vor dem Filterbett (10) angeordnet sind oder das Filterbett durchsetzen.

9. Filtervorrichtung nach einem der vorstehenden Ansprüche 3 bis 7, **dadurch gekennzeichnet** daß die Heizeinrichtung durch einen von einem erwärmten Fluid durchströmten Wärmetauscher gebildet ist, dessen Wärmetauschelement(e) auf der Stromzuseite unmittelbar vor dem Filterbett (10) oder im Filterbett (10) angeordnet ist (sind).

**Fig. 1**

Fig. 2

Fig. 3

0 259 674